(19) Europäisches Patentamt
European Patent Office
Office européen des brevets

(11) **EP 4 506 970 A1**

(12) **EUROPEAN PATENT APPLICATION**
published in accordance with Art. 153(4) EPC

(43) Date of publication:
**12.02.2025 Bulletin 2025/07**

(21) Application number: **23784751.2**

(22) Date of filing: **04.04.2023**

(51) International Patent Classification (IPC):
*H01F 27/245* (2006.01)   *C21D 8/12* (2006.01)
*C22C 38/00* (2006.01)   *C22C 38/60* (2006.01)
*C23C 22/00* (2006.01)   *H01F 1/147* (2006.01)
*H02K 1/02* (2006.01)

(52) Cooperative Patent Classification (CPC):
**C21D 8/12; C22C 38/00; C22C 38/60; C23C 22/00;
H01F 1/147; H01F 27/245; H02K 1/02**

(86) International application number:
**PCT/JP2023/013935**

(87) International publication number:
**WO 2023/195465 (12.10.2023 Gazette 2023/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.04.2022 JP 2022063471**

(71) Applicant: **NIPPON STEEL CORPORATION
Chiyoda-ku
Tokyo 100-8071 (JP)**

(72) Inventors:
• **FUKUCHI, Minako
Tokyo 100-8071 (JP)**
• **TAKEDA, Kazutoshi
Tokyo 100-8071 (JP)**

(74) Representative: **Vossius & Partner
Patentanwälte Rechtsanwälte mbB
Siebertstrasse 3
81675 München (DE)**

(54) **LAMINATED CORE**

(57)    The laminated core includes: a plurality of electrical steel sheets laminated on each other; and an adhesive portion that is provided between the electrical steel sheets adjacent to each other in the laminating direction and bonds the electrical steel sheets to each other; and wherein each of the plurality of electrical steel sheets includes a base steel sheet and an insulating coating formed on both surfaces of the base steel sheet, and hardness of an adhesive forming the adhesive portion is 20 to 150 MPa.

FIG. 1

**Description**

Technical Field of the Invention

The present invention relates to a laminated core.

Priority is claimed on Japanese Patent Application No. 2022-063471, filed April 6, 2022, the content of which is incorporated herein by reference.

Related Art

As a core (core) used in a rotary electric machine, a laminated core in which a plurality of electrical steel sheets are joined and laminated is known. As a method for joining electrical steel sheets, interlocking and welding are known. However, in interlocking and welding, the magnetic characteristics of the electrical steel sheet may be deteriorated due to mechanical stress and thermal stress at the time of processing, and furthermore, interlayer short circuit, and the performance of the laminated core may be deteriorated.

Therefore, in recent years, a joining method by adhesion has attracted attention as a joining method other than interlocking and welding. In joining using an adhesive, since the steel sheet is not processed like interlocking, deterioration of magnetic characteristics is suppressed in a laminated core (bonded and laminated core) laminated and joined.

As an adhesive for bonding electrical steel sheets to each other, for example, as shown in Patent Document 1, an epoxy resin having a small volume change and excellent heat resistance, oil resistance, and chemical resistance is known.

On the other hand, since it is necessary to set the temperature to a relatively high temperature in order to cure the epoxy resin, stress is applied to the steel sheet at the time of bonding, and there is a possibility that iron loss is deteriorated. Therefore, for example, Patent Document 2 to 7 proposes that a urethane resin is used as an adhesive that can be bonded at a temperature lower than that of an epoxy resin.

Citation List

Patent Document

Patent Document 1: Japanese Unexamined Patent Application, First Publication No. 2022-000888

Patent Document 2: Japanese Unexamined Patent Application, First Publication No. 2017-179233

Patent Document 3: Japanese Unexamined Patent Application, First Publication No. 2017-186542

Patent Document 4: Japanese Unexamined Patent Application, First Publication No. H06-182929

Patent Document 5: Japanese Unexamined Patent Application, First Publication No. H06-271834

Patent Document 6: Japanese Unexamined Patent Application, First Publication No. H07-268051

Patent Document 7: Japanese Unexamined Patent Application, First Publication No. 2002-293864

Summary of Invention

Problems to be Solved by the Invention

However, in the case of joining using an adhesive as described above, in general, it is known that a resin having a higher adhesive strength is harder, and strain is imparted to a steel sheet with curing shrinkage, resulting in deterioration of magnetic characteristics. That is, it has been considered that the adhesive strength and the magnetic characteristics are contradictory. Therefore, conventionally, it has not been easy to achieve both high adhesive strength and excellent magnetic characteristics in the bonded and laminated core.

Therefore, an object of the present invention is to provide a laminated core (bonded and laminated core) having high adhesive strength and excellent magnetic characteristics.

Means for Solving the Problem

The present inventors have studied a method for achieving both high adhesive strength and excellent magnetic characteristics in a laminated core (bonded and laminated core) formed by laminating a plurality of electrical steel sheets through an adhesive portion.

As a result, the present inventors have found that it is possible to achieve both high adhesive strength and excellent magnetic characteristics by controlling the hardness in the order of μm measured by a nanoindenter in the adhesive portion.

In addition, it has been found that by setting the weight-average molecular weight of the sol component of the adhesive forming the adhesive portion within a predetermined range, the balance between suppression of deterioration of magnetic characteristics and improvement of adhesive strength is further improved.

The present invention has been made on the basis of the above-described findings. The gist of the present invention is as follows.

[1] A laminated core according to an aspect of the present invention includes: a plurality of electrical steel sheets laminated on each other; and an adhesive portion that is provided between the electrical steel sheets adjacent to each other in the laminating direction and bonds the electrical steel sheets to each other; and wherein each of the plurality of electrical steel sheets includes a base steel sheet and an insulating coating formed on both surfaces of the base steel sheet, and a hardness of an adhesive forming the adhesive portion is 20 to 150 MPa.

[2] In the laminated core according to [1], a weight-average molecular weight of the sol component of the adhesive may be 1000 to 10,000.

[3] In the laminated core according to [1] or [2], in the plurality of electrical steel sheets, when an area fraction of grains in the {hkl}<uvw> orientation with respect to a total visual field when a surface parallel to a rolled surface having a depth of 1/2 of a sheet thickness from a surface of the base steel sheet is measured by SEM-EBSD is expressed as Ahkl-uvw, A411-011 may be 15.0% or more.

[4] The laminated core according to [3], wherein the base steel sheet contains: 0.0100% or less of C, 1.50% to 4.00% of Si, 0.0001% to 1.0000% of sol.Al, 0.0100% or less of S, 0.0100% or less of N, 2.50% to 5.00% in total of one or more selected from the group consisting of Mn, Ni, and Cu, 0.000% to 1.000% of Co, 0.000% to 0.400% of Sn, 0.000% to 0.400% of Sb, 0.000% to 0.400% of P, and 0.0000% to 0.0100% in total of one or more selected from the group consisting of Mg, Ca, Sr, Ba, Ce, La, Nd, Pr, Zn, and Cd, in terms of % by mass as chemical composition, wherein when a Mn content is denoted by [Mn], a Ni content is denoted by [Ni], a Cu content is denoted by [Cu], a Si content is denoted by [Si], a sol.Al content is denoted by [sol.Al], and a P content is denoted by [P] in terms of % by mass, the following formula (1) is satisfied, and a remainder is Fe and impurities.

$$(2 \times [Mn] + 2.5 \times [Ni] + [Cu]) - ([Si] + 2 \times [sol.Al] + 4 \times [P]) \geq 1.50\% \quad \cdots (1)$$

Effects of the Invention

According to the above aspect of the present invention, it is possible to provide a laminated core having high adhesive strength and excellent magnetic characteristics.

Brief Description of the Drawing

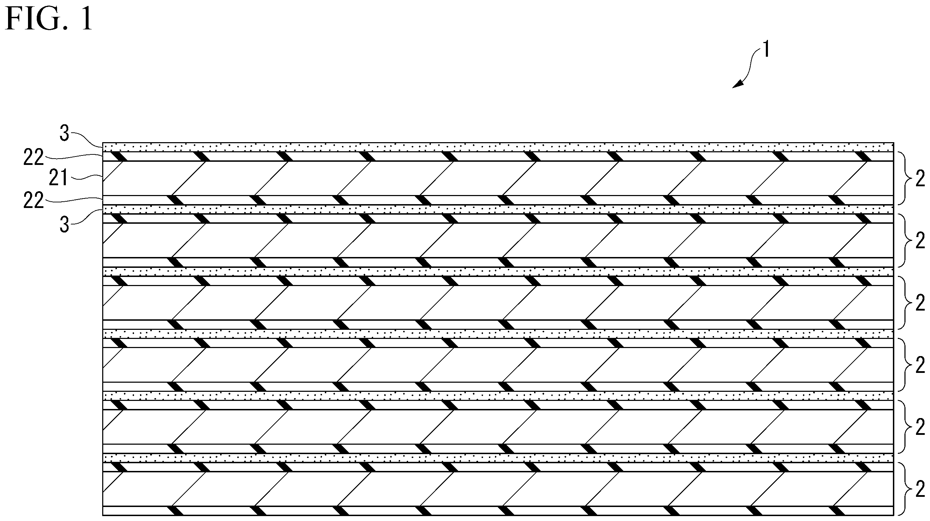

FIG. 1 is a diagram illustrating an example of a side view of a laminated core according to the present embodiment.

Embodiments of the Invention

As illustrated in FIG. 1, a laminated core according to an embodiment of the present invention (laminated core according to the present embodiment) includes: a plurality of electrical steel sheets 2 laminated on each other; and an adhesive portion 3 that is provided between the electrical steel sheets 2 and 2 adjacent to each other in the laminating direction and bonds the electrical steel sheets 2 and 2 to each other, and wherein

each of the plurality of electrical steel sheets 2 includes a base steel sheet 21 and an insulating coating 22 formed on both surfaces of the base steel sheet 21, and
a hardness of an adhesive forming the adhesive portion 3 (also referred to as the hardness of the adhesive portion) is 20 to 150 MPa.

Each will be described below.

<Adhesive portion >

[Hardness]

The adhesive portion 3 included in the laminated core 1 according to the present embodiment joins the electrical steel sheets 2 and 2 adjacent to each other in the laminating direction by bonding.

The adhesive portion is formed by applying an adhesive to a surface of an electrical steel sheet, and then laminating and press-bonding the electrical steel sheets. At that time, the resin having higher adhesive strength is harder, and strain is imparted to a steel sheet with curing shrinkage, resulting in deterioration of magnetic characteristics.

In the laminated core 1 according to the present embodiment, it is possible to increase the adhesive strength while suppressing the deterioration of the magnetic characteristics by controlling the hardness of the adhesive that forms (composes) the adhesive portion 3 on the order of $\mu$m, as measured by a nanoindenter. Specifically, the hardness of the adhesive is set to 20 to 150 MPa.

When the hardness of the adhesive is less than 20 MPa, sufficient adhesive strength cannot be obtained. On the other hand, when the hardness of the adhesive exceeds 150 MPa, deterioration of magnetic characteristics becomes remarkable.

The hardness of the adhesive forming the adhesive portion 3 can be measured in the following manner.

For example, a sample is taken out by cutting out from several sheets which are delaminated from laminated core with a precision cutter so that the cross section of the insulating coating can be observed. A sample for measurement is prepared by performing CP processing (ion milling processing) on the center portion in the thickness direction of the adhesive-applied portion of the insulating coating of the sample. The hardness is measured at room temperature (25°C) under a load of 250 $\mu$N using TRIBOINDENTER manufactured by HYSITRON or a nanoindenter equivalent thereto. Five points are measured, and the average value is taken as the hardness of the adhesive.

If the thickness of the adhesive portion 3 is too thick, deterioration of magnetic characteristics due to stress of curing increases, and if the thickness is too thin, the bonding area is significantly reduced due to the influence of the surface roughness of the electrical steel sheet to be bonded, and there is a concern that the adhesive strength is insufficient.

Therefore, when the thickness of the adhesive portion is A in a unit of $\mu$m, A and the arithmetical average roughness Ra of the surface of the electrical steel sheet to be bonded, which is defined in JISB0601 (2013), preferably satisfy the following formula (2).

$$3.0 \times \mathrm{Ra} \leq \mathrm{A} \leq 3.0 \qquad (2)$$

The thickness A of the adhesive portion can be measured by, for example, the optical method described in JISK5600-1-7 (2014).

The arithmetical average roughness Ra of the surface of the electrical steel sheet can be measured using, for example, a surface roughness measuring machine SE3500 manufactured by Kosaka Laboratory Ltd. or a stylus roughness meter equivalent thereto. At this time, the measurement direction is the sheet width direction (C direction), the measurement length is 8 mm, the speed is 0.1 mm/s, and the cut-off value is 0.8 mm.

The area fraction (ratio of area where adhesive portion exists to area of laminated portion of electrical steel sheet) of the adhesive portion is preferably 40% or less. In general, in joining with an adhesive, the adhesive is applied so that the area fraction of the adhesive portion is 50% or more in consideration of adhesiveness. However, in the laminated core according to the present embodiment, since there is a possibility that the magnetic characteristics deteriorate when the area fraction of the adhesive portion increases, the area fraction of the adhesive portion is preferably 40% or less.

[Weight-average molecular weight of sol component of adhesive]

In the adhesive portion 3 included in the laminated core 1 according to the present embodiment, the weight-average molecular weight of the sol component of the adhesive is preferably 1000 to 10,000. When the weight-average molecular weight of the sol component is 1000 or more, a resin structure having rigidity can be obtained, and sufficient adhesive strength can be obtained. When the weight-average molecular weight of the sol component is 10,000 or less, the resin is not excessively hard, and deterioration of magnetic characteristics can be suppressed. That is, by setting the weight-average molecular weight of the sol component of the adhesive forming the adhesive portion within a predetermined range, the balance between suppression of deterioration of magnetic characteristics and improvement of adhesive strength is further improved.

The weight-average molecular weight of the sol component of the adhesive is more preferably 2000 to 8000 and still more preferably 3000 to 6000.

Not the weight-average molecular weight of the entire adhesive but the weight-average molecular weight of the sol component is specified because the weight-average molecular weight of the uncrosslinked part of the adhesive affects the magnetic characteristics.

The weight-average molecular weight of the sol component of the adhesive can be measured using, for example, GPC (Gel Permeation Chromatography: Gel Permeation Chromatography) such as a high-speed GPC system HLC-8320GPC manufactured by Toyo Soda Co., Ltd., for a measurement sample prepared by immersing a solidified adhesive cut out from several sheets which are delaminated from laminated core with a precision cutter in 10 mM lithium bromide-containing N,N-dimethylformamide for 24 hours. Conditions at that time are as follows.

Column: PLgel 5 $\mu$m Guard, PLgel 5 $\mu$m MIXED-Cx2 (Polymer Laboratories)
Mobile phase: 10 mM lithium bromide containing N,N-dimethylformamide
Flow rate: 1.0 mL/min
Column temperature: 40°C
Data Processing: EcoSEC-WorkStation

Examples of the resin composing the adhesive include an acrylic resin, a urethane resin, an epoxy resin, and a phenol resin. Among them, an acrylic resin which has a certain degree of rigidity after curing, can secure adhesive strength, and has a small compressive stress on the steel sheet due to curing is preferable, and the proportion of the acrylic resin may be 90 wt% or more. In addition, the acrylic resin is more preferably an anaerobic curing acrylic resin from the viewpoint of thinning the applied portion. The adhesive includes the resin and impurities.

<Electrical steel sheet>

The electrical steel sheet included in the laminated core 1 according to the present embodiment includes a base steel sheet and insulating coatings formed on both surfaces of the base steel sheet. The electrical steel sheet may be a known electrical steel sheet (oriented electrical steel sheet or non-oriented electrical steel sheet), and when application to a motor or the like is assumed, the electrical steel sheet is preferably a non-grain-oriented electrical steel sheet.

In the case of a non-oriented electrical steel sheet, the base steel sheet preferably has the following texture and chemical composition.

[Base steel sheet]

(Texture)

In the electrical steel sheet, the texture is controlled in order to obtain a low iron loss and a high magnetic flux density. For example, the magnetic characteristics are improved by developing a microstructure ($\alpha$ fiber) which has an easy magnetization axis in the plane of the steel sheet, is advantageous for improving the magnetic characteristics, and can be relatively easily increased in development by a rolling process in hot rolling and cold rolling, which are essential steps of steel sheet manufacture. Specifically, it is effective to form a microstructure in which the <110> direction is substantially parallel to the rolling direction (RD).

On the other hand, when the {100}<011 > orientation is developed, a change in magnetic characteristics with respect to stress increases, specifically, deterioration (stress sensitivity) of the magnetic characteristics in a case where compressive stress acts.

On the other hand, by developing a special orientation of {411}<011>, the magnetic characteristics are further improved.

Therefore, it is preferable to control the texture when a surface parallel to the rolled surface having a depth of 1/2 of the sheet thickness from the surface (the surface of the base steel sheet excluding the insulating coating) is measured with a scanning electron microscope with an electron backscatter diffraction function (SEM-EBSD). Specifically, when the area fraction of grains of the {hkl}<uvw> orientation (tolerance of 10° or less) to the total visual field, obtained by the above measurement, is expressed as Ahkl-uvw, A411-011 (hereinafter, sometimes referred to as {411 }<011> fraction) is preferably set to 15.0% or more.

The {411}<011> fraction is more preferably 25.0% or more, still more preferably 30.0% or more, still more preferably 35.0% or more, and particularly preferably 40.0% or more. The upper limit is not particularly limited, but may be 80.0% or less from the viewpoint of manufacturing load.

The area fraction of the specific oriented grain can be measured by the following method. That is, for the area fraction of specific oriented grain, a target-specific orientation is extracted (tolerance is set to 10°, and hereinafter, expressed as tolerance of 10° or less) from a measurement region by a scanning electron microscope (SEM) with an electron backscatter diffraction (EBSD: Electron Back Scattering Diffraction) function observed under the following measurement conditions using OIM Analysis 7.3 (manufactured by TSL). The extracted area is divided by the area of the measurement region to obtain the percentage. This percentage is defined as the area fraction of the specific oriented grain.

In the present embodiment, the "area fraction of grain having crystal orientation of {hkl}<uvw> orientation (tolerance of 10° or less) to measurement region" and the "area fraction of grains having a {hk1} orientation (tolerance: 10° or less) to a measurement region" may also be simply referred to as "{hkl}<uvw> ratio" and "{hkl} ratio", respectively. In the description of the crystal orientation, it is assumed that the tolerance is 10° or less.

Details of the measurement conditions for obtaining the area fraction of each oriented grain are as follows.

- Measuring device: SEM model number "JSM-6400 (manufactured by JEOL Ltd.)", EBSD detector model number "HIKARI (manufactured by TSL)", or an apparatus similar thereto was used.
- Step interval: 5.0 $\mu$m
- Magnification: 100 times
- Measuring object: a surface parallel to a rolled surface having a depth of 1/2 of the sheet thickness from the surface
- Measuring region: rectangular region of 1000 $\mu$m or more $\times$ 1000 $\mu$m or more

(Chemical composition)

In addition, the chemical composition of the base steel sheet of the electrical steel sheet included in the laminated core according to the present embodiment is not limited and may be in a known range, but in a case where the above-described {411}<011> fraction is obtained and excellent magnetic characteristics are obtained, the following chemical composition is preferable.

In the following description, "%", which is a unit of the content of each element, means "% by mass" unless otherwise specified. In addition, a numerical range represented by "to" means a range including numerical values described before and after "to" as a lower limit and an upper limit.

The base steel sheet of the electrical steel sheet included in the laminated core according to the present embodiment has a chemical composition in which ferrite-austenite transformation (hereinafter, $\alpha$-$\gamma$ transformation) can occur to some extent (chemical composition in which a certain amount of $\gamma$ is generated when heated even if the entire $\gamma$ is not transformed), and preferably has a chemical composition including 0.0100% or less of C, 1.50% to 4.00% of Si, 0.0001% to 1.0000% of sol.Al, 0.0100% or less of S, 0.0100% or less of N, 2.50% to 5.00% in total of one or more selected from the group consisting of Mn, Ni, and Cu, 0.000% to 1.000% of Co, 0.000% to 0.400% of Sn, 0.000% to 0.400% of Sb, 0.000% to 0.400% of P, and 0.0000% to 0.0100% in total of one or more selected from the group consisting of Mg, Ca, Sr, Ba, Ce, La, Nd, Pr, Zn, and Cd, by mass as chemical composition, and a remainder of Fe and impurities. Furthermore, it is preferable that the contents of Mn, Ni, Cu, Si, sol.Al and P satisfy predetermined conditions described later. Examples of the impurities include impurities contained in raw materials such as ore and scrap, and impurities contained in a manufacturing step.

(C: 0.0100% or less)

C is an element that increases iron loss or causes magnetic aging by precipitation of fine carbides to inhibit grain growth. Therefore, the lower the C content, the better. Such a phenomenon is remarkable when the C content is more than 0.0100%. Therefore, the C content is preferably set to 0.0100% or less. The C content is more preferably 0.0050% or less, still more preferably 0.0025% or less. The lower limit of the C content is not particularly limited, but the C content is preferably set to 0.0005% or more in consideration of the cost of the decarburization treatment at the time of refining.

(Si: 1.50% to 4.00%)

Si is an element that increases electric resistance, reduces eddy-current loss, reduces iron loss, or increases a yield ratio to improve punching workability into a core. When the Si content is less than 1.50%, these effects cannot be sufficiently obtained. Therefore, in the case of obtaining the above effect, the Si content is preferably set to 1.50% or more.

On the other hand, when the Si content is more than 4.00%, the magnetic flux density decreases, punching workability decreases or cold rolling becomes difficult due to an excessive increase in hardness. Therefore, the Si content is preferably set to 4.00% or less.

(sol.Al: 0.0001% to 1.0000%)

Sol.Al is an element that increases electrical resistance, reduces eddy-current loss, and reduces iron loss. Sol.Al is an element that also contributes to improvement of the relative magnitude of the magnetic flux density B50 with respect to the saturation magnetic flux density. Here, the magnetic flux density B50 is a magnetic flux density in a magnetic field of 5000 A/m. When the content of sol.Al is less than 0.0001%, these effects cannot be sufficiently obtained. Al also has an effect of promoting desulfurization in steelmaking. Therefore, the content of sol.Al is preferably set to 0.0001% or more. The content of sol.Al is more preferably 0.0010% or more, still more preferably 0.1000% or more.

On the other hand, when the content of sol.Al is more than 1.0000%, the magnetic flux density decreases. Therefore, the content of sol.Al is preferably set to 1.0000% or less.

(S: 0.0100% or less)

S is not an essential element, and is, for example, an element contained in steel as an impurity. S is precipitated as fine MnS and inhibits recrystallization and grain growth in annealing. Therefore, the lower the S content, the better. Such increase in iron loss and decrease in magnetic flux density due to the inhibition of recrystallization and grain growth are remarkable when the S content is more than 0.0100%. Therefore, the S content is preferably set to 0.0100% or less. The lower limit of the S content is not particularly limited, but the S content is preferably set to 0.0003% or more in consideration of the cost of the desulfurization treatment at the time of refining.

(N: 0.0100% or less)

N is an element that deteriorates magnetic characteristics through formation of fine precipitates such as TiN and AlN. Therefore, the lower the N content, the better. Such deterioration of magnetic characteristics is remarkable when the N content is more than 0.0100%, and thus the N content is preferably set to 0.0100% or less. The lower limit of the N content is not particularly limited, but the N content is preferably set to 0.0010% or more in consideration of the cost of the denitrification treatment at the time of refining.

(One or more selected from the group consisting of Mn, Ni, and Cu: 2.50% to 5.00% in total)

These elements are necessary for causing $\alpha$-$\gamma$ transformation. At least one of these elements is preferably contained at 2.50% or more in total.

On the other hand, when the content of these elements exceeds 5.00% in total, not only does the cost increase but also the magnetic flux density may decrease. Therefore, at least one of these elements is preferably set to 5.00% or less in total.

The amount of each of Mn, Ni, and Cu is not limited, but the Mn content is preferably 1.50% or more from the viewpoint of specific resistance.

In addition, it is preferable to further satisfy the following conditions as conditions under which $\alpha$-$\gamma$ transformation occurs and good magnetic characteristics are obtained. That is, when the Mn content (% by mass) is denoted by [Mn], the Ni content (% by mass) is denoted by [Ni], the Cu content (% by mass) is denoted by [Cu], the Si content (% by mass) is denoted by [Si], the sol.Al content (% by mass) is denoted by [sol.Al], and the P content (% by mass) is denoted by [P], the following formula (1) is preferably satisfied.

$$(2 \times [Mn] + 2.5 \times [Ni] + [Cu]) - ([Si] + 2 \times [sol.Al] + 4 \times [P]) \geq 1.50\% \quad \cdots (1)$$

When the above-described formula (1) is not satisfied, the $\alpha$-$\gamma$ transformation does not occur, or even if the $\alpha$-$\gamma$ transformation occurs, the transformation point is high, so that a sufficient magnetic flux density may not be obtained even if the below-described manufacturing method is applied.

The chemical composition of the base steel sheet of the electrical steel sheet is based on the fact that the electrical steel sheet contains the above elements and the remainder of Fe and impurities (impurities other than the above), but instead of a part of the remaining Fe, one or more of Co, Sn, Sb, P, Mg, Ca, Sr, Ba, Ce, La, Nd, Pr, Zn, and Cd may be contained in the following ranges. Since these elements are not necessarily contained, the lower limit is 0%. In addition, these elements are not intentionally added and are acceptable even if they are contained as impurities.

(Co: 0.000% to 1.000%)

Co is an element that increases the magnetic flux density. Therefore, it may be contained as necessary.

On the other hand, when Co is excessively contained, the cost increases. Therefore, the Co content is preferably set to 1.000% or less.

(Sn: 0.000% to 0.400%, Sb: 0.000% to 0.400%)

Sn and Sb are elements that improve the texture after cold rolling and recrystallization to improve the magnetic flux density. Therefore, these elements may be contained as necessary. In the case of imparting a further effect such as magnetic characteristics, it is preferable to contain one or more selected from the group consisting of 0.020% to 0.400% of Sn and 0.020% to 0.400% of Sb.
On the other hand, when these elements are excessively contained, the steel embrittles. Therefore, both the Sn content and the Sb content are preferably 0.400% or less.

(P: 0.000% to 0.400%)

P is an element effective for ensuring the hardness of the steel sheet after recrystallization. P is also an element having a suitable influence on magnetic characteristics. Thus, it may be contained. In the case of obtaining these effects, the P content is preferably set to 0.020% or more.
On the other hand, when P is excessively contained, the steel embrittles. Therefore, the P content is preferably set to 0.400% or less.

(One or more selected from the group consisting of Mg, Ca, Sr, Ba, Ce, La, Nd, Pr, Zn, and Cd: 0.0000% to 0.0100% in total)

Mg, Ca, Sr, Ba, Ce, La, Nd, Pr, Zn, and Cd are elements that react with S in the molten steel during casting of the molten steel and generate a sulfide or an oxysulfide or precipitates of both of them. Hereinafter, Mg, Ca, Sr, Ba, Ce, La, Nd, Pr, Zn, and Cd may be collectively referred to as a "coarse precipitate forming element". The grain size of the precipitate of the coarse precipitate forming element is about 1 $\mu$m to 2 $\mu$m, and is much larger than the grain size (about 100 nm) of fine precipitates such as MnS, TiN, and AlN. Therefore, these fine precipitates adhere to the precipitate of the coarse precipitate forming element, and it becomes difficult to inhibit recrystallization and grain growth in annealing such as intermediate annealing. In order to sufficiently obtain these effects, these elements are preferably 0.0005% or more in total. The content is more preferably 0.0010% or more.
On the other hand, when the total amount of these elements exceeds 0.0100%, the total amount of sulfide or oxysulfide or both is excessive, and recrystallization and grain growth in annealing such as intermediate annealing are inhibited. Therefore, the content of the coarse precipitate forming element is preferably set to 0.0100% or less in total.
The chemical composition of the base steel sheet may be measured by a general steel analysis method. For example, the chemical composition may be measured using ICP-AES (Inductively Coupled Plasma-Atomic Emission Spectrometry). Specifically, the chemical composition is specified by measuring a test piece collected from the steel sheet with a predetermined measuring device under a condition based on a calibration curve prepared in advance. C and S may be measured using a combustion-infrared absorption method, and N may be measured using an inert gas fusion-thermal conductivity method.
When the electrical steel sheet has an insulating coating on its surface, the insulating coating may be mechanically removed by polishing, grinder, or the like, and then subjected to analysis.

[Insulating coating]

The insulating coating included in the electrical steel sheet included in the laminated core 1 according to the present embodiment is not limited, and may be a known insulating coating. The insulating coating may be an organic component or an inorganic component, and the insulating coating may contain an organic component and an inorganic component. The inorganic component is, for example, dichromic acid-boric acid-based, phosphoric acid-based, silica-based, or the like. The organic component is, for example, a general acrylic resin, an acrylic styrene resin, an acrylic silicon resin, a silicon resin, a polyester resin, an epoxy resin, or a fluorine resin. In consideration of coatability, a preferable resin is an emulsion type resin. An insulating coating that exerts adhesive ability by heating and/or pressurization may be applied. The insulating coating having adhesive ability is, for example, an acrylic resin, a phenolic resin, an epoxy resin, or a melamine resin.
The laminated core according to the present embodiment can obtain the effect as long as it has the above characteristics regardless of the manufacturing method. However, according to the following method, it is preferable because it can be stably manufactured.

(I) An application step of punching an electrical steel sheet having insulating coatings formed on both surfaces thereof into a predetermined shape as necessary, and then applying an adhesive to a surface of the electrical steel sheet, and
(II) A laminating step of laminating a plurality of electrical steel sheets coated with an adhesive and press-bonding the electrical steel sheets to form a laminated.

Hereinafter, preferred conditions will be described. Known conditions can be applied to conditions that are not described.

<Application step>

In the application step, an electrical steel sheet having insulating coatings formed on both surfaces is punched into a predetermined shape as necessary, and then an adhesive is applied to the surface of the electrical steel sheet.

The electrical steel sheet is first formed by punching into a shape required as a laminated core (stator core, rotor core).

Thereafter, an adhesive is applied to the surface of the electrical steel sheet. At the time of application, in order to ensure the rigidity of the laminated core by adhesion, it is preferable to apply an adhesive such that the application area is 10% or more of the area of the portion to be adhered of the electrical steel sheet (such that the application area fraction is 10% or more). On the other hand, the coating area fraction is preferably 40% or less in order to suppress deterioration of magnetic characteristics due to curing shrinkage of the adhesive.

<Laminating step>

In the laminating step, a plurality of electrical steel sheets to which an adhesive is applied are laminated and press-bonded under a condition in which curing of the adhesive can be secured, thereby forming a laminated core.

At the time of press-bonding, it is preferable to set the temperature to 40°C or lower from the viewpoint of avoiding adhesive strength deterioration accompanying an increase in compressive stress due to rapid progress of curing by heating.

Furthermore, the laminated core that has been pressurized and cured with the adhesive is kept at 100 to 150°C for 10 minutes or more. The holding time is preferably 30 minutes or more. By holding the temperature after curing, the hardness of the adhesive after forming a laminated core can be set to 20 to 150 MPa, and the weight-average molecular weight of the sol component of the adhesive can be set to 1000 to 10,000. This is considered to be because the adhesive strength is improved by removing the residual volatile component and the compressive strain due to the curing of the adhesive is released by the holding.

In addition, in a case where A411-011 of the base steel sheet is 15.0% or more in the laminated electrical steel sheets, a manufacturing method including the following steps can be applied.

Hereinafter, in the present embodiment, as the Ar3 temperature, the Ar1 temperature, and the Ac1 temperature (all in a unit of °C), those obtained by the following methods are used.

The Ar3 temperature and the Ar1 temperature are determined from a change in thermal expansion of the steel (steel sheet) during cooling at an average cooling rate of 1°C/sec, and the Ac1 temperature is determined from a change in thermal expansion of the steel (steel sheet) during heating at an average heating rate of 1°C/sec.

<Hot rolling step>

In the hot rolling step, hot rolling is performed on a steel satisfying a predetermined chemical composition (preferably the above-described chemical composition) to manufacture a hot rolled steel sheet. The hot rolling step includes a heating process and a rolling process.

The steel is, for example, a slab manufactured by normal continuous casting, and the steel having the above-described chemical composition is manufactured by a known method. For example, molten steel is manufactured in a converter, an electric furnace, or the like. The manufactured molten steel is secondarily refined by degassing equipment or the like to obtain molten steel having the above chemical composition (the chemical composition does not substantially change in the subsequent steps). A slab is cast by a continuous casting method or an ingot-making method using molten steel. Blooming of the cast slab may be performed.

In the heating process, it is preferable to heat the steel having the above-described chemical composition to 1000 to 1200°C. Specifically, the steel is charged into a heating furnace or a soaking furnace and heated in the furnace. The holding time at the heating temperature in the heating furnace or the soaking furnace is not particularly limited, and is, for example, 1 to 200 hours.

In the rolling process, multi-pass rolling is performed on the steel heated in the heating process is to manufacture a hot rolled steel sheet. The "pass" means that the steel sheet passes through one rolling stand having a pair of work rolls and undergoes rolling. The hot rolling may be performed, for example, by performing tandem rolling using a tandem rolling mill including a plurality of rolling stands (each rolling stand has a pair of work rolls) arranged in a line to perform multi-pass rolling, or by performing reverse rolling having a pair of work rolls to perform multi-pass rolling. From the viewpoint of productivity, it is preferable to perform a plurality of rolling passes using a tandem rolling mill.

The rolling in the rolling process (rough rolling and finish rolling) is preferably performed at a temperature in the $\gamma$ region (Ar3 temperature or higher). That is, it is preferable to perform hot rolling so that the temperature at the time of passing through the final pass of finish rolling (finish rolling temperature FT (°C)) is equal to or higher than the Ar3 temperature.

The finish rolling temperature FT means the surface temperature (°C) of the steel sheet on the rolling stand exit side where the final pass rolling is performed in the rolling process during the hot rolling step. The finish rolling temperature FT can be measured by, for example, a thermometer installed on the rolling stand exit side on which the final pass rolling is performed. The finish rolling temperature FT means, for example, an average value of the measured temperatures of portions excluding one section at the front end and one section at the rear end in a case where the total length of the steel sheet is equally divided into 10 sections in the rolling direction to obtain 10 sections.

<Cooling step>

In the cooling step, the steel sheet (hot rolled steel sheet) after the hot rolling step (after completion of finish rolling) is cooled. By transformation from austenite to ferrite by this cooling, moderately fine grains with high strain are obtained. As cooling conditions, it is preferable that cooling be started 0.10 seconds or more after passing through the final pass of finish rolling (after elapse of 0.10 seconds or more), and cooling be performed so that the surface temperature of the hot rolled steel sheet becomes 300°C or more and Ar1 temperature or less after 3 seconds (rapid cooling is not performed immediately after). In this way, by avoiding rapid cooling immediately after hot rolling, a special rapid cooling device becomes unnecessary, which is also advantageous in terms of manufacture (cost). In addition, the texture of the hot rolled steel sheet becomes a microstructure in which the non-recrystallized austenite is transformed when being quenched immediately after, and tends to become a texture accumulated in the {100}<011> orientation in the microstructure after the final annealing to be performed thereafter. On the other hand, when rapid cooling is not performed immediately after, microstructure which is transformed from the partially recrystallized austenite is generated, and it is presumed that the {411}<011> orientation is likely to accumulate in the microstructure after the subsequent final annealing. That is, in order to increase the {411}<011> fraction, it is important to transform partially recrystallized austenite, and it is preferable not to immediately perform rapid cooling.

The cooling condition is preferably set such that the average grain size of the hot rolled steel sheet before the cold rolling is 3 to 10 $\mu$m. At a suitable grain size, which is not excessively refined, subsequent cold rolling allows the development of $\alpha$-fibers after intermediate annealing, the {411}<011> orientation which is normally less likely to develop after skin pass and final annealing can be developed. On the other hand, when the grains are excessively coarsened, the $\alpha$ fiber is hardly developed after cold rolling and intermediate annealing, and a desired {411} <011> fraction may not be obtained.

In order to set the average grain size in the hot rolled steel sheet before cold rolling to 3 to 10 $\mu$m, the temperature may be set to the Ar1 temperature or lower within 3 seconds after passing through the final pass of finish rolling. On the other hand, when the cooling stop temperature is lower than 300°C, there is a concern that the average grain size in the hot rolled steel sheet is excessively refined. Therefore, the cooling stop temperature is preferably set to 300°C or higher.

The hot rolled steel sheet temperature (especially the finish rolling temperature) and the surface temperature of the hot rolled steel sheet 3 seconds after passing through the final pass of the finish rolling are measured by the following method.

In a hot rolling equipment line used for manufacturing an electrical steel sheet, in a case where a cooling device and a conveying line (for example, a conveying roller) are disposed downstream of a hot rolling mill, a thermometer for measuring a surface temperature of a hot rolled steel sheet is disposed on an exit side of a rolling stand for performing a final pass of the hot rolling mill, and a plurality of thermometers is disposed along the conveying line also on the conveying roller disposed downstream of the rolling stand, the hot rolling temperature and the surface temperature of the hot rolled steel sheet 3 seconds after passing through the final pass of the finish rolling may be measured by the thermometer disposed in the hot rolling equipment line.

The cooling is performed using a cooling device disposed downstream of the rolling stand on which the final pass is performed. A plurality of water cooling apparatuses is generally disposed, and a thermometer is disposed on the inlet side of each water-cooling device. The cooling device may be, for example, a well-known water cooling apparatus or a well-known forced air cooling device. Preferably, the cooling device is a water cooling apparatus. The coolant of the water cooling apparatus may be water or a mixed fluid of water and air.

<Cold rolling step>

In the cold rolling step, the hot rolled steel sheet is subjected to cold rolling to obtain a cold rolled steel sheet. The hot rolled steel sheet is preferably not subjected to hot-band annealing before the cold rolling step in order to develop the $\alpha$-

fiber after cold rolling. The hot-band annealing mentioned here means, for example, a heat treatment in which the heating temperature is Ac1 temperature or lower and 300°C or higher.

The cold rolling may be performed, for example, by performing tandem rolling using a tandem rolling mill including a plurality of rolling stands (each rolling stand has a pair of work rolls) arranged in a line to perform multi-pass rolling. Alternatively, reverse rolling may be performed by a Sendzimir rolling mill or the like having a pair of work rolls, and rolling may be performed by one-pass rolling or multi-pass rolling. From the viewpoint of productivity, it is preferable to perform multi-pass rolling using a tandem rolling mill.

In the cold rolling, the cold rolling is performed without performing the annealing treatment in the middle of the cold rolling. For example, when the reverse rolling is performed and the multi-pass cold rolling is performed, the multi-pass cold rolling is performed without interposing the annealing treatment between the passes of the cold rolling. When annealing is performed between the passes, a desired orientation cannot be developed in a step described later.

The cold rolling may be performed in only one pass using a reverse type rolling mill. When cold rolling using a tandem type rolling mill is performed, cold rolling is continuously performed in a plurality of passes (passes at each rolling stand).

In the present embodiment, in order to develop the $\alpha$ fiber, it is preferable to set the rolling reduction RR1 (%) in the cold rolling to 75 to 95%. The rolling reduction RR1 is more preferably 78 to 92%. The rolling reduction RR1 is defined as follows.

Rolling reduction RR1 (%) = (1- sheet thickness after rolling of final pass in cold rolling/sheet thickness before rolling of first pass in cold rolling) $\times$ 100

<Intermediate annealing step>

In the intermediate annealing step, the steel sheet after the cold rolling step (cold rolled steel sheet) is subjected to intermediate annealing.

In the present embodiment, it is preferable to perform annealing of raising the temperature (heating) to an annealing temperature (intermediate annealing temperature T1) (°C) of 600°C to Ac1 temperature or less at a temperature rising rate of 300°C/sec or more.

When the temperature rising rate to the annealing temperature is less than 300°C/sec, there is a concern that sufficient recovery does not occur and a desired texture cannot be obtained. The temperature rising rate is preferably 400°C/sec or more. The faster the temperature rising rate, the more preferable it is for the formation of the texture, and in the case of obtaining a temperature rising rate of more than 2000°C/sec, the cost is greatly increased because a special device or control is required, and thus the temperature rising rate may be 2000°C/sec or less. More preferably, it is 1000°C/sec or less.

The temperature rising rate is calculated by dividing the temperature change from room temperature (for example, 25°C) to the annealing temperature by the time required for temperature rises.

In addition, when the annealing temperature of the intermediate annealing exceeds the Ac1 temperature, a part of the microstructure of the steel sheet is transformed into austenite, and the {411}<011> oriented grains may not sufficiently grow during the subsequent skin pass rolling and final annealing due to the change in crystal orientation accompanying the transformation, and the magnetic flux density may not increase.

On the other hand, if the temperature of the intermediate annealing is too low, recrystallization does not occur, and {411}<011> oriented grains do not sufficiently grow during subsequent skin pass rolling and final annealing, and the magnetic flux density may not increase. Therefore, the intermediate annealing temperature T1 (°C) is preferably set to 600°C or higher.

The intermediate annealing temperature T1 (°C) is a sheet temperature (surface temperature) in the vicinity of the extraction port of the annealing furnace.

The holding time at the intermediate annealing temperature T1 (°C) in the intermediate annealing step may be a time well known to those skilled in the art. The holding time at the intermediate annealing temperature T1 (°C) is, for example, 5 to 60 seconds, but is not limited thereto.

In addition, the atmosphere at the time of intermediate annealing is not particularly limited, and for example, an atmosphere gas (drying) containing 20% of $H_2$ by volume percentage and $N_2$ as the remainder is used. The cooling rate of the steel sheet after the intermediate annealing is not particularly limited, and is, for example, 5.0 to 60.0°C/sec.

<Skin pass rolling step>

In the skin pass rolling step, the cold rolled steel sheet after the intermediate annealing step is subjected to rolling (cold rolling) at room temperature in the air. For the skin pass rolling, for example, a reverse rolling mill typified by the above-described Sendzimir rolling mill, or a tandem rolling mill are used.

In the skin pass rolling step, rolling is performed without performing an annealing treatment in the middle. For example, when reverse rolling is performed and skin pass rolling is performed in a plurality of passes, the rolling is performed without interposing an annealing treatment between the passes. The skin pass rolling may be performed with only one pass using a reverse type rolling mill. When skin pass rolling using a tandem type rolling mill is performed, rolling is continuously performed in a plurality of passes (passes at each rolling stand).

In the present embodiment, after the strain is introduced into the steel sheet by hot rolling and cold rolling, the strain introduced into the steel sheet is temporarily reduced by intermediate annealing. Then, skin pass rolling is performed. As a result, by performing the intermediate annealing while reducing the strain excessively introduced by the cold rolling in the intermediate annealing, the {111} grains are suppressed from preferentially recrystallizing in the sheet surface of the steel sheet, and the {411}<011> crystal oriented grains remain. Then, an appropriate strain amount is introduced into each grain in the steel sheet in the skin pass rolling, and grain growth by bulging is easily generated in the final annealing of the next step.

The rolling reduction RR2 in the skin pass rolling is preferably set to 10 to 15%. When the rolling reduction RR2 is less than 10%, the strain amount becomes too small, and the final annealing time required for grain growth by bulging becomes long. On the other hand, when the rolling reduction RR2 exceeds 15%, the strain amount becomes too large, normal grain growth occurs instead of bulging, and {411}<148> or {111}<112> grows by final annealing.

Here, the rolling reduction RR2 is defined as follows.

Rolling reduction RR2 (%) = (1 - Sheet thickness after final pass rolling in skin pass rolling/Sheet thickness before first pass rolling in skin pass rolling) $\times$ 100

The number of passes in the skin pass rolling may be only one pass (that is, only one rolling is performed) or it may be multi-pass.

The skin pass rolling performed in the present embodiment is significantly different in effect from the skin pass rolling performed after the final annealing. By performing hot rolling, cooling, cold rolling, intermediate annealing, skin pass rolling, and final annealing in this order under predetermined conditions, a predetermined microstructure can be obtained.

<Final annealing step>

In the final annealing step, the steel sheet after the skin pass rolling step is annealed by holding the steel sheet at an annealing temperature T2 (°C) of 750°C or more and Ac1 temperature or less for 2 hours or more. When the final annealing temperature T2 (°C) is lower than 750°C, there is a concern that grain growth due to bulging does not sufficiently occur. In this case, the development degree of the {411}<011> orientation decreases.

On the other hand, when the final annealing temperature T2 (°C) exceeds the Ac1 temperature, a part of the microstructure of the steel sheet is transformed to austenite, grain growth due to bulging does not occur, and a desired {411}<011> fraction cannot be obtained.

In addition, in a case where the annealing time is less than 2 hours, even if the final annealing temperature T2 (°C) is 750°C or higher and the Acl temperature or lower, grain growth due to bulging does not sufficiently occur, and there is a concern that the development degree of the {411}<011> orientation may decrease.

On the other hand, the annealing time of the final annealing is not particularly limited, and may be 10 hours or less because the effect is saturated even if the annealing time exceeds 10 hours.

The temperature rising rate TR2 to the final annealing temperature T2 in the final annealing step may be any temperature rising rate known to those skilled in the art. 40°C/hour or more and less than 200°C/hour are exemplified, but the present invention is not limited to this range.

The temperature rising rate TR2 is obtained by the following method.

A thermocouple is attached to the steel sheet having the above chemical composition and obtained by performing hot rolling to a skin pass to obtain a sample steel sheet. The temperature of the sample steel sheet to which the thermocouple is attached is raised, and the time from the start of the temperature rise until the temperature reaches the final annealing temperature T2 is measured. The temperature rising rate TR2 is obtained based on the measured time.

The atmosphere during the final annealing step is not particularly limited. The atmosphere at the time of the final annealing step may be, for example, an atmosphere gas (dry) containing 20% of Hz by volume percentage and $N_2$ as the remainder, a 100% of hydrogen ($H_2$) atmosphere, or the like. The cooling rate of the steel sheet after final annealing is not particularly limited. The cooling rate is, for example, 5 to 20°C/sec.

In the method for manufacturing an electrical steel sheet, for example, shot blasting and/or pickling may be performed after the cooling step and before the cold rolling step in the manufacturing step. In the shot blasting, the steel sheet after hot rolling is subjected to shot blasting to break and remove the scale formed on the surface of the steel sheet after hot rolling. In the pickling, the steel sheet after hot rolling is subjected to a pickling treatment. In the pickling treatment, for example, a hydrochloric acid aqueous solution is used as a pickling bath. The scale formed on the surface of the steel sheet is removed by pickling. After the cooling step and before the cold rolling step, shot blasting may be performed and then pickling may be performed. Further, after the cooling step and before the cold rolling step, pickling may be performed and shot blasting may not be performed. After the cooling step and before the cold rolling step, shot blasting may be performed, and the pickling treatment may not be performed. Shot blasting and pickling are optional steps. Therefore, both the shot blasting step and the pickling step may not be performed.

<Insulating coating forming step >

In the method for manufacturing an electrical steel sheet according to the present embodiment, an insulating coating may be further formed on the surface of the steel sheet (electrical steel sheet) after the final annealing by coating after the final annealing step. The insulating coating may be formed before the application of the adhesive, and the coating may not be performed after the final annealing. For example, the processing may be performed after punching.

Examples

An ingot having the chemical composition shown in Table 1 was produced by casting molten steel. In Table 1, the left side of formula (1) represents the value of the left side of formula (1) described above. In addition, the row of coarse precipitate forming element such as Mg represents a total of one or more selected from the group consisting of Mg, Ca, Sr, Ba, Ce, La, Nd, Pr, Zn, and Cd. The steel sheet No. d was a component system in which $\alpha$ was stable and $\alpha$-$\gamma$ transformation did not occur.

The prepared ingot was heated to 1150°C, held for 1 hour, and then subjected to hot rolling to perform finish rolling so that the finish rolling temperature FT was the temperature shown in Table 2.

After completion of hot rolling (after passing through the final pass), the time until the start of cooling was set as shown in Table 2, cooling was performed so that the temperature of the steel sheet after 3 seconds from the start of cooling was the temperature shown in Table 2.

The hot rolled steel sheet thus obtained was not subjected to hot-band annealing, scale was removed by pickling, and cold rolling was performed at a rolling reduction RR1 shown in Table 2 to obtain a steel sheet having a sheet thickness of 0.30 mm.

This steel sheet was subjected to intermediate annealing in which the steel sheet was heated to an intermediate annealing temperature T1 shown in Table 2 at a temperature rising rate shown in Table 2 in an atmosphere composed of 20% of hydrogen and 80% of nitrogen in terms of volume percentage, and held at T1 for 30 seconds.

The steel sheet after the intermediate annealing was subjected to skin pass rolling at a rolling reduction RR2 shown in Table 1.

Next, the steel sheet after the skin pass rolling was subjected to final annealing at a temperature rising rate of 100°C/hour and a final annealing temperature T2 shown in Table 2 in an atmosphere of 100% hydrogen. At this time, the holding time at the final annealing temperature T2 was set to 2 hours.

From each of the electrical steel sheets (manufacture Nos. 1 to 9) obtained by the above method, two steel sheets of 30 mm×60 mm were cut out, and an adhesive was applied so that the areas of 10 mm×30 mm overlapped, and then the steel sheets were laminated in the sheet thickness direction. At the time of applying the adhesive, the adhesive composed of the resin shown in Table 3 was applied so that the application area fraction and the adhesive portion thickness after press-bonding were in the range shown in Table 3.

The adhesive was applied, and the laminated steel sheets were pressed at 25°C or 100°C and 0.1 MPa for 60 seconds to be press-bonded and cured.

After completion of curing, the steel sheets were further heated and kept at the temperature and time shown in Table 3.

The thickness of the adhesive portion, the hardness of the adhesive composing the adhesive portion, and the weight-average molecular weight of the sol component of the obtained electrical steel sheet were measured by the above-described methods.

The results are shown in Table 4.

Separately from the above, two steel sheets of 30 mm×60 mm were cut out from each electrical steel sheet (manufacture Nos. 1 to 9) having an insulating coating on the surface, an adhesive was applied so that the areas of 10 mm×30 mm overlapped, and then the steel sheets were laminated in the sheet thickness direction. At the time of applying the adhesive, the adhesive composed of the resin shown in Table 3 was applied so that the application area fraction and the adhesive portion thickness after press-bonding were in the range shown in Table 3.

An adhesive was applied, and the laminated steel sheets were press-bonded and cured at 25°C or 100°C at 0.1 MPa for 60 seconds so as to be the same as those in which the thickness of the adhesive portion, the hardness of the adhesive composing the adhesive portion, and the weight-average molecular weight of the sol component are measured.

After completion of curing, the steel sheets were further heated and kept at the temperature and time shown in Table 3.

[Adhesive strength]

The adhesive strength of the obtained electrical steel sheets was measured by the following method.

<Analysis device>

Autograph AGS- 10kNX
<Measurement conditions>
Tensile form; Shear tensile test
Tensile temperature: 25°C
Tensile speed: 10 mm/min

For the measurement, a tensile test was performed at n = 5 until fracture, and the average value of the maximum strengths until fracture was taken as the adhesive strength.

The results are shown in Table 4.

When the adhesive strength was 3.0 MPa or more, it was determined that sufficient adhesive strength was obtained.

In addition, separately from the above, three steel sheets of 55 mm×55 mm were cut out from each electrical steel sheet (manufacture Nos. 1 to 9) having an insulating coating on the surface, and two of them were applied with an adhesive and then the steel sheets were laminated in the sheet thickness direction so that all surfaces overlapped each other. At the time of applying the adhesive, the adhesive composed of the resin shown in Table 3 was applied so that the application area fraction and the adhesive portion thickness after press-bonding were in the range shown in Table 3.

An adhesive was applied, and the laminated steel sheets were press-bonded and cured at 25°C or 100°C at 0.1 MPa for 60 seconds so as to be the same as those in which the thickness of the adhesive portion, the hardness of the adhesive composing the adhesive portion, and the weight-average molecular weight of the sol component are measured.

After completion of curing, the steel sheets were further heated and kept at the temperature and time shown in Table 3.

[Magnetic characteristics]

The deterioration ratio of the magnetic characteristics of the obtained electrical steel sheet was measured by the following method.

First, an iron loss W10/400 (W/Kg) in the 0° direction and the 90° direction from the rolling direction was measured according to JISC2556 (2015) for one steel sheet different from the two steel sheets overlapped after cutting, and the average value thereof was taken as an iron loss W1 without adhesion.

Thereafter, the iron loss W10/400 (W/Kg) of the bonded electrical steel sheets in the 0° direction and the 90° direction from the rolling direction was measured according to JISC2556 (2015), and the average value thereof was taken as the iron loss W2 after bonding.

From W1 and W2, the iron loss degradation rate Wa (%) was calculated based on the following equation.

$$Wa = (W2 - W1)/W1 \times 100$$

The results are shown in Table 4.

When Wa was 15.0% or less, it was determined that deterioration of magnetic characteristics was suppressed.

[Table 1]

| Steel sheet No. | Chemical composition (Remainder is Fe and impurities) | | | | | | | | | | | | | Mn + Ni + Cu | Left side of formula (1) |
|---|---|---|---|---|---|---|---|---|---|---|---|---|---|---|---|
| | C | Si | sol.Al | S | N | Mn | Ni | Cu | Co | Sn | Sb | P | Coarse precipitate forming element such as Mg | | |
| | [mass%] | [mass%] | [mass%] | [mass%] | [mass%] | [mass%] | [mass%] | [mass%] | [mass%] | [mass%] | [mass%] | [mass%] | [mass%] | [mass%] | - |
| a | 0.0018 | 2.50 | 0.0050 | 0.0018 | 0.0011 | 3.00 | 0.00 | 0.00 | 0.000 | 0.000 | 0.000 | 0.020 | 0.0000 | 3.00 | 3.41 |
| b | 0.0012 | 2.40 | 0.1200 | 0.0015 | 0.0014 | 2.80 | 0.20 | 0.00 | 0.000 | 0.030 | 0.010 | 0.010 | 0.0040 | 3.00 | 3.42 |
| c | 0.0012 | 2.60 | 0.5000 | 0.0015 | 0.0014 | 2.60 | 0.00 | 0.15 | 0.100 | 0.150 | 0.000 | 0.000 | 0.0000 | 2.75 | 1.75 |
| d | 0.0018 | 2.50 | 0.3000 | 0.0018 | 0.0011 | 2.00 | 0.00 | 0.00 | 0.000 | 0.000 | 0.000 | 0.020 | 0.0000 | 2.00 | 0.82 |
| e | 0.0018 | 2.50 | 0.0050 | 0.0018 | 0.0011 | 300 | 0.00 | 0.00 | 0.000 | 0.000 | 0.000 | 0.020 | 0.0000 | 3.00 | 3.41 |

[Table 2]

| Steel sheet No. | Transformation point | | | Hot rolling step | Cooling step | | Cold rolling step | Intermediate annealing step | | Skin pass rolling step | Final annealing step | Texture |
|---|---|---|---|---|---|---|---|---|---|---|---|---|
| | Ar3 temperature | Ar1 temperature | Ac1 temperature | Finish rolling temperature FT | Time until start of cooling | Temperature after 3 seconds | Rolling reduction RR1 | Temperature rising rate | Annealing temperature T1 | Rolling reduction RR2 | Annealing temperature T2 | A411-011 |
| | [°C] | [°C] | [°C] | [°C] | [Second] | [°C] | [%] | [°C/ Second] | [°C] | [%] | [°C] | [%] |
| a | 812 | 779 | 932 | 950 | 0.10 | 700 | 88 | 500 | 700 | 15 | 800 | 47.9 |
| b | 809 | 777 | 929 | 950 | 0.50 | 400 | 88 | 1200 | 700 | is | 800 | 51.9 |
| c | 918 | 953 | 1059 | 950 | 0.50 | 400 | 88 | 800 | 700 | 15 | 800 | 49.3 |
| d | - | - | - | 950 | 0.10 | 700 | 88 | 600 | 700 | 15 | 800 | 8.7 |
| e | 812 | 779 | 932 | 650 | 0.10 | 550 | 88 | 300 | 700 | 15 | 800 | 12.4 |

[Table 3]

| Manufacture No. | Manufacture conditions | | | | | | |
|---|---|---|---|---|---|---|---|
| | Steel sheet No. | Resin composing adhesive | Surface roughness of electrical steel sheet Ra ($\mu$m) | Adhesive application area fraction (%) | Press-bonding temperature (°C) | Heating temperature after curing (°C) | Heat retention time after curing (minute) |
| 1 | a | Anaerobic curing type acrylic resin | 0.32 | 34 | 25 | 110 | 40 |
| 2 | b | Anaerobic curing type acrylic resin | 0.51 | 29 | 25 | 120 | 50 |
| 3 | c | Anaerobic curing type acrylic resin | 0.61 | 22 | 25 | 130 | 60 |
| 4 | d | Anaerobic curing type acrylic resin | 0.46 | 33 | 25 | 50 | 60 |
| 5 | e | Anaerobic curing type acrylic resin | 0.53 | 32 | 25 | 250 | 60 |
| 6 | a | Anaerobic curing type acrylic resin | 0.32 | 37 | 25 | 110 | 20 |
| 7 | d | Anaerobic curing type acrylic resin | 0.46 | 35 | 25 | 110 | 40 |
| 8 | b | Anaerobic curing type acrylic, resin | 0.51 | 24 | 25 | 120 | 50 |
| 9 | a | Anaerobic curing type acrylic resin | 0.32 | 37 | 100 | 110 | 20 |

[Table 4]

| Manufacture No. | Laminated core | | | | | | Electrical steel sheet |
|---|---|---|---|---|---|---|---|
| | Steel sheet No. | Hardness of adhesive (MPa) | Weight-average molecular weight of adhesive | Thickness of adhesive portion A ($\mu$m) | Adhesive strength (MPa) | Iron loss deterioration rate Wa (%) | Iron loss (W10/400) W1 (W/Kg) |
| 1 | a | 127 | 3604 | 2.7 | 4.1 | 13.1 | 12.9 |
| 2 | b | 116 | 4164 | 1.9 | 3.8 | 12.3 | 13.2 |
| 3 | c | 62 | 4489 | 2.5 | 3.5 | 10.7 | 13.3 |
| 4 | d | <u>265</u> | 2650 | 2.7 | 4.3 | 21.5 | 14.3 |
| 5 | e | 8 | 876 | 2.7 | 0.8 | 10.1 | 14.5 |
| 6 | a | 139 | 10378 | 2.7 | 4.2 | 14.7 | 12.9 |

(continued)

| Manufacture No. | Laminated core | | | | | | Electrical steel sheet |
| --- | --- | --- | --- | --- | --- | --- | --- |
| | Steel sheet No. | Hardness of adhesive (MPa) | Weight-average molecular weight of adhesive | Thickness of adhesive portion A ($\mu$m) | Adhesive strength (MPa) | Iron loss deterioration rate Wa (%) | Iron loss (W10/400) W1 (W/Kg) |
| 7 | d | 123 | 3517 | 2.8 | 40 | 14.1 | 14.3 |
| 8 | b | 111 | 4035 | 1.3 | 3.1 | 11.8 | 13.2 |
| 9 | a | <u>155</u> | 5348 | 2.3 | 4.5 | 16.2 | 12.9 |

As can be seen from Tables 1 to 4, in manufacture Nos. 1 to 3 and Nos.6 to 8, which are the inventive examples, the hardness of the adhesive was within the scope of the present invention, the adhesive strength was high, and the deterioration ratio of the magnetic characteristics was small.

On the other hand, in the manufacture Nos. 4, 5, and 9 as the comparative examples, the predetermined adhesive portion was not provided, and the deterioration ratio (iron loss deterioration rate Wa) of the adhesive strength or the magnetic characteristics fell below the target.

Field of Industrial Application

According to the present invention, it is possible to provide a laminated core having high adhesive strength and excellent magnetic characteristics. This laminated core can be used for a rotary electric machine or the like, and has high industrial applicability.

Brief Description of the Reference Symbols

    1 Laminated core (bonded and laminated core)
    2 Electrical steel sheet
    3 Adhesive portion
    21 Base steel sheet
    22 Insulating coating

**Claims**

1. A laminated core, comprising:

       a plurality of electrical steel sheets laminated on each other; and
       an adhesive portion that is provided between the electrical steel sheets adjacent to each other in the laminating direction and bonds the electrical steel sheets to each other; and
       wherein
       each of the plurality of electrical steel sheets includes a base steel sheet and an insulating coating formed on both surfaces of the base steel sheet, and
       a hardness of an adhesive forming the adhesive portion is 20 to 150 MPa.

2. The laminated core according to claim 1,
   wherein a weight-average molecular weight of a sol component of the adhesive is 1000 to 10,000.

3. The laminated core according to claim 1 or 2, wherein
   in the plurality of electrical steel sheets, when an area fraction of grains in the {hkl}<uvw> orientation with respect to a total visual field when a surface parallel to a rolled surface having a depth of 1/2 of a sheet thickness from a surface of the base steel sheet is measured by SEM-EBSD is expressed as Ahkl-uvw, A411-011 is 15.0% or more.

4. The laminated core according to claim 3,
   wherein the base steel sheet contains:

   0.0100% or less of C,
   1.50% to 4.00% of Si,
   0.0001% to 1.0000% of sol.Al,
   0.0100% or less of S,
   0.0100% or less of N,
   2.50% to 5.00% in total of one or more selected from the group consisting of Mn, Ni, and Cu,
   0.000% to 1.000% of Co,
   0.000% to 0.400% of Sn,
   0.000% to 0.400% of Sb,
   0.000% to 0.400% of P, and
   0.0000% to 0.0100% in total of one or more selected from the group consisting of Mg, Ca, Sr, Ba, Ce, La, Nd, Pr, Zn, and Cd, in terms of % by mass as chemical composition,
   wherein
   when a Mn content is denoted by [Mn], a Ni content is denoted by [Ni], a Cu content is denoted by [Cu], a Si content is denoted by [Si], a sol.Al content is denoted by [soLAl], and a P content is denoted by [P] in terms of % by mass,
   the following formula (1) is satisfied, and
   a remainder is Fe and impurities,

$$(2 \times [Mn] + 2.5 \times [Ni] + [Cu]) - ([Si] + 2 \times [sol.Al] + 4 \times [P]) \geq 1.50\% \quad \cdots \quad (1).$$

# FIG. 1

## INTERNATIONAL SEARCH REPORT

| International application No. |
|---|
| **PCT/JP2023/013935** |

### A. CLASSIFICATION OF SUBJECT MATTER

**H01F 27/245**(2006.01)i; **C21D 8/12**(2006.01)i; **C22C 38/00**(2006.01)i; **C22C 38/60**(2006.01)i; **C23C 22/00**(2006.01)i; **H01F 1/147**(2006.01)i; **H02K 1/02**(2006.01)i
FI:  H01F27/245; C22C38/00 303U; C22C38/60; C23C22/00 B; H01F1/147 183; H02K1/02 Z; C21D8/12 A

According to International Patent Classification (IPC) or to both national classification and IPC

### B. FIELDS SEARCHED

Minimum documentation searched (classification system followed by classification symbols)

H01F27/245; C21D8/12; C22C38/00; C22C38/60; C23C22/00; H01F1/147; H02K1/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2020/129941 A1 (NIPPON STEEL CORP.) 25 June 2020 (2020-06-25) paragraphs [0017], [0027], [0049] | 1-4 |
| A | JP 2022-513168 A (POSCO) 07 February 2022 (2022-02-07) entire text, all drawings | 1-4 |
| A | JP 2007-177260 A (JFE STEEL CORP.) 12 July 2007 (2007-07-12) entire text, all drawings | 1-4 |
| A | WO 2021/256534 A1 (NIPPON STEEL CORP.) 23 December 2021 (2021-12-23) entire text, all drawings | 1-4 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 May 2023** | **30 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

| | | International application No. |
|---|---|---|
| | | **PCT/JP2023/013935** |

| Patent document cited in search report | | | Publication date (day/month/year) | Patent family member(s) | | | Publication date (day/month/year) |
|---|---|---|---|---|---|---|---|
| WO | 2020/129941 | A1 | 25 June 2020 | US 2022/0025228 A1 paragraphs [0050], [0068], [0107] | | | |
| JP | 2022-513168 | A | 07 February 2022 | US 2022/0041893 A1 entire text, all drawings | | | |
| JP | 2007-177260 | A | 12 July 2007 | (Family: none) | | | |
| WO | 2021/256534 | A1 | 23 December 2021 | CN 115210828 A entire text, all drawings | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022063471 A
- JP 2022000888 A
- JP 2017179233 A
- JP 2017186542 A
- JP H06182929 A
- JP H06271834 A
- JP H07268051 A
- JP 2002293864 A